Europäisches Patentamt

(19) European Patent Office

Office européen des brevets

(11) Publication number: **0 131 076**
**B1**

(12) **EUROPEAN PATENT SPECIFICATION**

(45) Date of publication of patent specification: **13.01.88**

(51) Int. Cl.⁴: **F 16 L 33/20**

(21) Application number: **83303988.6**

(22) Date of filing: **08.07.83**

(54) Ferrule, coupling and coupling process.

(43) Date of publication of application:
**16.01.85 Bulletin 85/03**

(45) Publication of the grant of the patent:
**13.01.88 Bulletin 88/02**

(84) Designated Contracting States:
**BE DE FR GB SE**

(56) References cited:
**DE-A-2 001 098**
**GB-A-1 294 132**
**US-A-2 028 316**
**US-A-2 086 703**
**US-A-3 530 900**
**US-A-4 226 446**
**US-A-4 305 608**

(73) Proprietor: **The Gates Rubber Company**
**999 South Broadway P.O. Box 5887**
**Denver, Colorado 80217 (US)**

(72) Inventor: **Stuemky, Robert E.**
**Box 181 Star Route**
**Elizabeth Colorado 80107 (US)**

(74) Representative: **Carpmael, John William**
**Maurice et al**
**CARPMAELS & RANSFORD 43 Bloomsbury**
**Square**
**London, WC1A 2RA (GB)**

Courier Press, Leamington Spa, England.

## Description

The invention relates to attachable couplings for hose, but more particularly, the invention relates to a deformable ferrule for use in coupling hose.

Couplings that are post-assembled to flexible hose typically have a male stem portion that is insertable into a hose end and a ferrule that is concentric with the male stem. The ferrule may be pre-attached to the male stem or post-attached to the male stem during a coupling process requiring deformation of the ferrule. Together, the male stem and ferrule define an annular cavity for receiving a hose end. The coupling is retained to the hose end by pinching or compressing it between the ferrule and stem. The ferrule may be pre-attached to the stem such as by crimping an end portion of the ferrule to a stem collar so that the annular hose receiving cavity is formed. A ferrule as a separate part, may be attached to a collar of the stem when the ferrule is deformed such as by crimping or swaging.

Some ferrules have a smooth bore and are deformed during crimping to provide what is known as a "ripple crimp" where a plurality of annular ridges and grooves are formed in the ferrule sidewall. The male stem may have a plurality of annular serrations or grooves to aid in gripping a hose end when a ferrule is deformed during the coupling process.

In some applications, circumferential, helical, or longitudinal ribs are provided on the inside of the ferrule to aid in gripping a hose end. Such ribs may contact an embedded reinforcement of the hose for greater coupling retention. The ferrules may be deformed to a generally cylindrical exterior shape such as by crimping or swaging.

A pre-attached ferrule having a constant wall thickness and a frusto-conical shape to aid in inserting a hose end prior to deformation is shown in US—A—3530900. During the coupling process, the frusto-conical shaped ferrule is crimped to have a generally cylindrical shape with a plurality of circumferential ribs and grooves that co-operate to pinch the hose end.

A post attached ferrule is exemplified by US—A—4305608. The ferrule has a plurality of longitudinally oriented ribs that are capable of penetrating a hose cover to embed with a hose reinforcement when the ferrule is deformed to have a generally cylindrical exterior shape. During crimping, portions of the ribs are deformed against a stem collar to define a means for attaching the ferrule to the male stem.

Another example of a pre-attached ferrule is shown in US—A—4226446. A serrated stem and ferrule with a "ripple crimp" is used to pinch a hose end and retain a coupling. A difference in the pitch spacing between a "ripple crimp" and serrations on a male stem causes the hose to be pinched in progressively reduced amounts of compression even though the ferrule and stem define a generally annular cavity for receiving the hose end. While reduced pressure zones are recognised as being beneficial to minimise local stresses in a coupled hose end for improving coupling retention, special care must be taken to ensure that the pitch spacing of the ripple crimp is properly located with respect to the pitch spacing of the male stem so that reduced pressure zones are achieved.

Although US—A—3530900 shows generally a pre-crimped frusto-conical cavity for receiving a hose end, it and US—A—4226446 and 4305608 show post-crimped annular cavities for pinching or compressing a hose end. Of these, only US—A—4305608 appears suitable for high pressure hose applications as indicated by ferrule ribs directly contacting a hose reinforcement.

Also, US—A—2028316 shows a ferrule with circumferential ribs and a tapered outside diameter, in which the ribs are forced inwards when the ferrule is deformed.

As has been said, it has been recognised that reduced pressure zones near the hose end can be beneficial, though certain problems must be taken into account. GB—A—1294132 shows a deformable ferrule for use in coupling a hose comprising a sleeve type body with an outer surface, an inner surface, a fitting end and a hose end, wherein the body has a sidewall portion that decreases in thickness longitudinally of the body toward the hose end, so that, after deformation of the body when coupling a hose the outer surface has a generally cylindrical shape, and the inner surface juxtaposed said sidewall portion has a generally frusto-conical shape. By this means, upon swaging, pressure on the hose is greater at the fitting end than at the hose end. That ferrule has annular grooves or screw threads on the inner surface. These grooves cause the wires of the hose braiding to undulate, causing stress concentration where the wires are forced to bend tightly. This phenomenon is particularly marked at the fitting end where it can cause failure of the wires. In the device described in the GB patent, this is particularly marked because the grooves are deeper at the fitting end.

It would be desirable to provide a hose ferrule that controls decreasing pinching or compressing of a hose end during crimping, in a direction from a fitting end of the ferrule toward the hose end of the ferrule, and at the same time avoid conditions which might lead to failure of the braiding wires and provide as high resistance to axial pull-out as possible.

According to the present invention, a deformable ferrule is provided as in the precharacterising part of claim 1 wherein a plurality of generally parallel and circumferentially spaced apart ribs extend from the inner surface and are generally longitudinally orientated with the body, so that after said deformation of the body to give the outer surface a generally cylindrical shape, the ribs are generally orientated as frusto-conical elements of a cone wherein the circumferential spacing between ribs near the fitting end is smaller than the circumferential spacing between the ribs near the hose end.

It is found that by providing such ribs in a ferrule of this description, a greater pull-out force is achieved than would otherwise be expected from the characteristics of existing ferrules which have longitudinal ribs which are not generally orientated as frusto-conical elements of a cone.

According to the present invention, there is also provided a method for providing a frusto-conical surface portion along an inside surface of a ferrule to effect progressively reduced amounts of compression when coupling a hose, comprising the steps of providing a ferrule having a sleeve-type body with a fitting end, a hose end an inner surface and an outer surface which, with the inner surface, defines a sidewall portion of the ferrule that decreases in thickness longitudinally of the body toward the hose end, and deforming the ferrule to have a generally cylindrical outer surface while simultaneously forming a frusto-conical surface portion along the inner surface of the ferrule, characterised in that a plurality of generally parallel and circumferentially spaced apart ribs extend inwardly from the inner surface, substantially longitudinally orientated with the body so that after deforming the ferrule, the ribs are generally orientated as frusto-conical elements of a cone wherein the circumferential spacing between ribs near the fitting end is reduced and is smaller than the circumferential spacing between ribs near the hose end.

Several embodiments of the invention are now described by way of example with reference to the accompanying drawings, wherein:—

Figure 1 is an isometric view of a preferred embodiment of the ferrule partially cut away to expose inner surface portions of the ferrule;

Figure 2 is a full sectional view taken along the line 2—2 of Figure 1;

Figure 3 is a sectional view taken along the line 3—3 of Figure 2;

Figure 4 is a partially cut-away sectional side view of a coupled hose assembly showing the ferrule of Figure 3 prior to deformation;

Figure 5 is a view similar to that of Figure 4 showing the ferrule deformed on a coupled hose;

Figure 6 is a view similar to Figure 3 but showing the deformed ferrule of Figure 5, and

Figures 7 and 8 are sectional views like Figure 3 with each showing a further embodiment of the invention.

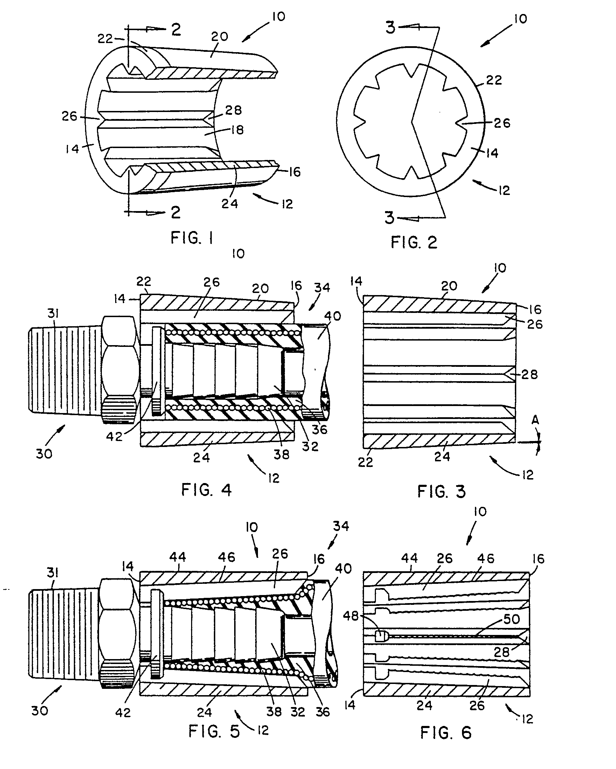

Referring to Figures 1 to 6, the ferrule 10 of the invention includes a sleeve-type body 12 having a fitting end 14, a hose end 16, a substantially cylindrical inner surface 18, and an exterior surface having a frusto-conical surface portion 20 and, optionally, a cylindrical surface portion 22. The inner surface 18 and outer surface portion 20 outline a sidewall portion 24 that decreases in thickness going longitudinally of the body 12 toward the hose end 16. A plurality of circumferentially spaced ribs 26 are oriented longitudinally of the body and project from the inner surface. The ribs may extend a major length of the body and ends of the ribs may be tapered 28.

. In service, the ferrule is used with a male stem 30 having some type of fitting 31 at one end and optionally a serrated stem 32 at the other end. The ferrule is slipped over an end portion of a hose 34 constructed with a tube 36, reinforcement 38, and cover 40 as exemplified by Figure 4. The stem may also include a locking collar 42 for securing the ferrule to the stem in a manner as described in US—A—4305608. The male stem is inserted in the hose bore and the ferrule is deformed by reducing it in diameter, such as by crimping or swaging, as illustrated by Figures 5 and 6. During deformation, the outer surface is changed to a generally cylindrical shape 44 and the inner surface is changed to a generally frusto-conical shape 46. The ribs change from being what may be described as longitudinal elements of a cylinder (Figure 3) to frusto-conical elements of a cone (Figure 6). Grooves 48 are formed in the ribs by the collar 42 and the hose reinforcement 38 is partially embedded 50 into portions of the ribs upon ferrule deformation. The ribs grip the reinforcement and the inner surface grips the hose end in a constantly decreasing manner progressively to reduce the amount of hose compression or pinching and thereby eliminate localised high stress points in the coupled hose at the hose end of the ferrule. The amount of reduction in wall thickness to effect a usable coupling will, of course, vary for different hoses and different applications. It has been determined that a satisfactory coupling is achieved when the outer frusto-conical surface portion has a half conical angle A up to about 4°. The cylindrical surface portion acts as an aid to reduce coupling skewing during crimping by being the first surface contacted and held by radially moving cylindrical elements of a crimping machine of the type well known in the art.

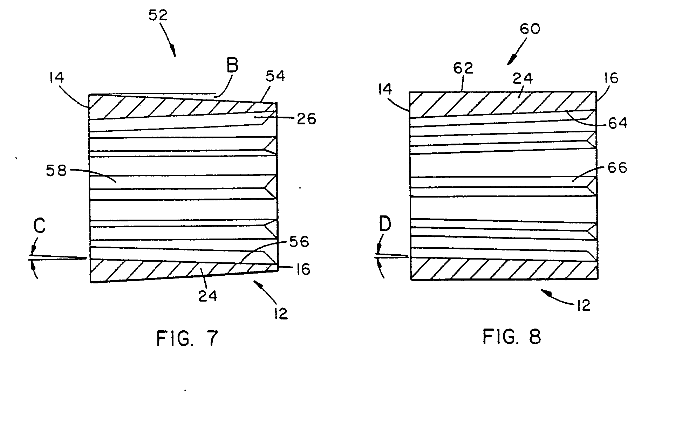

Additional examples of ferrules of the invention are illustrated in Figures 7 and 8. Both of the ferrules exhibit a sidewall portion 24 that decreases in thickness going longitudinally of the ferrule toward the hose end 16. Both of the ferrules exhibit on deformation, an outer surface that is generally cylindrically shaped and an inner surface portion that is generally frusto-conically shaped. More specifically, Figure 7 illustrates a ferrule 52 having a frusto-conical outer surface 54 at a half angle B and a frusto-conical inner surface 56 at a conical half angle C. The angles B, C need not be equal. Longitudinally oriented ribs 58 extend from the interior surface as elements of the frusto-conical surface 56. In use, the outer surface 54 is deformed to a generally cylindrical section in a manner described in reference to Figures 5 and 6. Such deformation increases angle C.

Figure 8 illustrates a ferrule 60 having a generally cylindrical outer surface 62 and a frusto-conical inner surface 64 having a conical half angle D. During deformation the ferrule is reduced to a smaller diameter with the outer surface remaining substantially cylindrical and the inner surface remaining frusto-conical so that the hose end receives progressively reduced amounts of pinching or compression. Longitudinally oriented ribs 66 extend along the inner surface as elements of the frusto-conical surface 64.

If desired, a collar (not shown) may extend from the body at the fitting end 14.

## Claims

1. A deformable ferrule for use in coupling a hose comprising a sleeve-type body (12) with an outer surface (20), an inner surface (18), a fitting end (14) and a hose end (16), wherein the body (10) has a sidewall portion that decreases in thickness longitudinally of the body towards the hose end (16) so that, after deformation of the body when coupling a hose the outer surface (20) has a generally cylindrical shape, and the inner surface (18) juxtaposed said sidewall portion has generally a frusto-conical shape, characterised in that a plurality of generally parallel and circumferentially spaced apart ribs (28, 58 or 66) extend from the inner surface and are generally longitudinally orientated with the body, so that after said deformation of the body (10), the ribs (28, 58 or 66) are generally orientated as frusto-conical elements of a cone wherein the circumferential spacing between ribs near the fitting end (14) is smaller than the circumferential spacing between the ribs (28, 58 or 66) near the hose end (16).

2. A ferrule as claimed in claim 1 mounted on a hose having reinforcement elements (38), the reinforcement elements being partially embedded into portions (50) of the ribs.

3. A ferrule as claimed in claim 1 or 2 wherein prior to deformation, one of the body surfaces has a portion that is generally frusto-conically shaped.

4. A ferrule as claimed in claim 1, 2 or 3 wherein the outer surface of the body has a portion that is generally frusto-conical prior to deformation.

5. A ferrule as claimed in claim 3 or 4 wherein the frusto-conical surface portion has a conical angle that is no greater than about 4 degrees.

6. A ferrule as claimed in any one of claims 1 to 5 wherein, prior to deformation, the inner surface (18) of the body (10) has a portion that is generally frusto-conical.

7. A method for providing a frusto-conical surface portion along an inside surface of a ferrule to effect progressively reduced amounts of compression when coupling a hose, comprising the steps of providing a ferrule having a sleeve-type body (10) with a fitting end (14), a hose end (16) an inner surface (18) and an outer surface which, with the inner surface, defines a sidewall portion of the ferrule that decreases in thickness longitudinally of the body toward the hose end, and deforming the ferrule to have a generally cylindrical outer surface (44 or 62) while simultaneously forming a frusto-conical surface portion along the inner surface of the ferrule, characterised in that a plurality of generally parallel and circumferentially spaced apart ribs (28, 58 or 66) extend inwardly from the inner surface (18), substantially longitudinally orientated with the body so that after deforming the ferrule, the ribs are generally orientated as frusto-conical elements of a cone wherein the circumferential spacing between ribs near the fitting end is reduced and is smaller than the circumferential spacing between ribs near the hose end.

8. A method according to claim 7 wherein the inner surface (18) is substantially cylindrical prior to deformation and the outer surface has a generally frusto-conical portion which, with the inner surface, defines the said sidewall portion.

9. A method according to claim 7 wherein, the mounting of the ferrule on a hose having reinforcement elements (38) partially embeds the reinforcement elements into portions (50) of the ribs.

## Patentansprüche

1. Verformbare Klemmhülse zur Verwendung beim Kuppeln eines Schlauchs, mit einem hülsenförmigen Körper (12) mit einer Außenfläche (20), einer Innenfläche (18), einem Anschlußende (14) und einem Schlauchende (16), bei der der Körper (10) einen Seitenwandabschnitt hat, dessen Dicke in Längsrichtung des Körpers zum Schlauchende (16) hin derart abnimmt, daß nach Verformung des Körpers bei der Schlauchverbindung die Außenfläche (20) eine im wesentlichen zylindrische Form hat und die dem Seitenwandabschnitt gegenüberliegende Innenfläche (18) eine im wesentlichen kegelstumpfförmige Form hat, dadurch gekennzeichnet, daß mehrere im wesentlichen parallele und umfangsmäßig beabstandete Rippen (28, 58 oder 66) von der Innenfläche abstehen und im wesentlichen in Längsrichtung zu dem Körper ausgerichtet sind, so daß nach der Verformung des Körpers (10) die Rippen (28, 58 oder 66) im wesentlichen als kegelstumpfförmige Elemente eines Kegels ausgerichtet sind, wobei die Umfangsabstände zwischen den Rippen in der Nähe des Anschlußendes (14) kleiner sind als die Umfangsabstände zwischen den Rippen (28, 58 oder 66) in der Nähe des Schlauchendes (16).

2. Klemmhülse nach Anspruch 1, montiert an einem Schlauch mit Verstärkungselementen (38), die teilweise in Abschnitte (50) der Rippen eingebettet sind.

3. Klemmhülse nach Anspruch 1 oder 2, bei der vor der Verformung eine der Körperflächen einen im wesentlichen stumpfkegelförmigen Abschnitt aufweist.

4. Klemmhülse nach Anspruch 1, 2 oder 3, bei der die Außenfläche des Körpers einen Abschnitt aufweist, der vor der Verformung im wesentlichen kegelstumpfförmig ist.

5. Klemmhülse nach Anspruch 3 oder 4, bei der der kegelstumpfförmige Flächenabschnitt einen Kegelwinkel aufweist, der nicht größer als etwa 4 Grad ist.

6. Klemmhülse nach einem der Ansprüche 1 bis 5, bei der vor der Verformung die Innenfläche (18) des Körpers (10) einen im wesentlichen kegelstumpfförmigen Abschnitt aufweist.

7. Verfahren zum Schaffen eines kegelstumpfförmigen Flächenbereiches längs einer Innenfläche einer Klemmhülse, um bei der Schlauchverbindung zunehmend verringerte Kompressionsbeträge zu bewirken, mit den folgenden Schritten: Schaffen einer Klemmhülse, die einen hülsenförmigen Körper (10) mit einem Anschlußende (14), einem Schlauchende (16), einer Innenfläche (18) und einer Außenfläche aufweist, welche mit der Innenfläche einen Seitenwandabschnitt der Klemmhülse bildet, dessen Dicke in Längsrichtung des Körpers zum Schlauchende hin abnimmt, und Verformen der Klemmhülse, derart, daß diese eine im wesentlichen zylindrische Außenfläche (44 oder 62) erhält, während gleichzeitig ein kegelstumpfförmiger Flächenabschnitt längs der Innenfläche der Klemmhülse gebildet wird, dadurch gekennzeichnet, daß mehrere im wesentlichen parallele und umfangsmäßig beabstandete Rippen (28, 58 oder 66) von der Innenfläche (18) einwärts abstehen und im wesentlichen in Längsrichtung zu dem Körper ausgerichtet sind, so daß nach der Verformung der Klemmhülse die Rippen im wesentlichen als kegelstumpfförmige Elemente eines Kegels ausgerichtet sind, wobei die Umfangsabstände zwischen den Rippen in der Nähe des Anschlußendes verringert sind und kleiner sind als die Umfangsabstände zwischen den Rippen in der Nähe des Schlauchendes (16).

8. Verfahren nach Anspruch 7, bei dem die Innenfläche (18) vor der Verformung im wesentlichen zylinderförmig ist und die Außenfläche einen im wesentlichen kegelstumpfförmigen Abschnitt aufweist, der mit der Innenfläche den Seitenwandabschnitt bildet.

9. Verfahren nach Anspruch 7, bei dem beim Montieren der Klemmhülse an einem Schlauch, der Verstärkungselemente (38) aufweist, die Verstärkungselemente teilweise in Abschnitte (50) der Rippen eingebettet werden.

## Revendications

1. Virole déformable à utiliser dans le raccordement d'un tuyau, comprenant un corps (12) du type manchon présentant une surface extérieure (20), une surface intérieure (18), une extrémité raccord (14) et une extrémité tuyau (16), le corps (10) comportant une partie de paroi latérale dont l'épaisseur diminue longitudinalement au corps vers l'extrémité tuyau (16) afin que, après déformation du corps lors du raccordement d'un tuyau, la surface extérieure (20) présente une forme globalement cylindrique et la surface intérieure (18), juxtaposée à ladite partie de paroi latérale, présente globalement une forme tronconique, caractérisée en ce qu'un groupe de nervures globalement parallèles et espacées circonférentiellement (28, 58 ou 66) font saillie de la surface intérieure et sont orientées globalement longitudinalement au corps, afin que, après ladite déformation du corps (10), les nervures (28, 58 ou 66) soient orientées globalement en éléments tronconiques d'un cône dans lequel l'écartement circonférentiel des nervures à proximité de l'extrémité raccord (14) est inférieur à l'écartement circonférentiel des nervures (28, 58 ou 66) à proximité de l'extrémité tuyau (16).

2. Virole selon la revendication 1, montée sur un tuyau comportant des éléments (38) d'armature, les éléments d'armature étant partiellement encastrés dans des parties (50) des nervures.

3. Virole selon la revendication 1 ou 2, dans laquelle, avant la déformation, l'une des surfaces du corps comporte une partie qui est de forme globalement tronconique.

4. Virole selon la revendication 1, 2 ou 3, dans laquelle la surface extérieure du corps comporte une partie qui est globalement tronconique avant la déformation.

5. Virole selon la revendication 3 ou 4, dans laquelle la partie de surface tronconique présente un angle de cône qui n'est pas supérieur à environ 4°.

6. Virole selon l'une quelconque des revendications 1 à 5, dans laquelle, avant déformation, la surface intérieure (18) du corps (10) comporte une partie qui est globalement tronconique.

7. Procédé pour réaliser une partie de surface tronconique le long d'une surface intérieure d'une virole afin d'établir des degrés de compression, progressivement réduits, lors du raccordement d'un tuyau, comprenant les étapes qui consistent à utiliser une virole comportant un corps (10) de type manchon ayant une extrémité raccord (14), une extrémité tuyau (16), une surface intérieure (18) et une surface extérieure qui définit, avec la surface intérieure, une partie de paroi latérale de la virole dont l'épaisseur diminue longitudinalement au corps vers l'extrémité du tuyau, et à déformer la virole pour obtenir une surface extérieure globalement cylindrique (44 ou 62) tout en formant simultanément une partie de la surface tronconique le long de la surface intérieure de la virole, caractérisé en ce qu'un groupe de nervures globalement parallèles et espacées circonférentiellement (28, 58 ou 66) fait saillie vers l'intérieur de la surface intérieure (18), dans une orientation sensiblement longitudinale au corps afin que, après déformation de la virole, les nervures soient globalement orientées en éléments tronconiques d'un cône dans lequel l'écartement circonférentiel des nervures à proximité de l'extrémité raccord est réduit et inférieur à l'écartement circonférentiel des nervures à proximité de l'extrémité tuyau.

8. Procédé selon la revendication 7, dans lequel la surface intérieure (18) est sensiblement cylindrique avant déformation et la surface extérieure comporte une partie globalement tronconique qui définit, avec la surface intérieure, ladite partie de paroi latérale.

9. Procédé selon la revendication 7, dans lequel le montage de la virole sur un tuyau comportant des éléments d'armature (38) provoque l'encastrement partiel des éléments d'armature dans des parties (50) des nervures.

0 131 076

FIG. 1

FIG. 2

FIG. 4

FIG. 3

FIG. 5

FIG. 6

1

FIG. 7

FIG. 8